Europäisches Patentamt

European Patent Office

Office européen des brevets

(11) Publication number: **0 467 393 A2**

# EUROPEAN PATENT APPLICATION

(21) Application number: **91112125.9**

(22) Date of filing: **19.07.91**

(51) Int. Cl.⁵: **B29C 45/28**, B29C 45/38

(30) Priority: **20.07.90 JP 192262/90**

(43) Date of publication of application:
**22.01.92 Bulletin 92/04**

(84) Designated Contracting States:
**AT BE CH DE FR GB LI NL**

(71) Applicant: **KABUSHIKI KAISHA MEIKI SEISAKUSHO**
**2, Ohne, Kitasaki-cho**
**Ohbu-shi, Aichi-ken(JP)**

(72) Inventor: **Asai, Ikuo**
**2-85, Shinjuku, Meito-ku**
**Nagoya-shi, Aichi-ken(JP)**

(74) Representative: **Füchsle, Klaus, Dipl.-Ing. et al**
**Hoffmann . Eitle & Partner Patentanwälte**
**Arabellastrasse 4**
**W-8000 München 81(DE)**

(54) **Sprue-less metal mold for molding disks.**

(57) The invention relates to a sprue-less metal mold of an injection molding machine for molding disks comprising a movable metal mold (2) having a cutter piston therein, said cutter piston (32) being installed in such a way that it freely rises and sets with respect to a cavity by a hydraulic means, a fixed metal mold (1) having provided thereto a resin reservoir (18) between the molding cavity and the inlet (21) for the molten resin, said resin reservoir (18) communicating with said cavity and said inlet (21), and a heating means (19) surrounding said resin reservoir (18). A plunger (20) is provided having a freely slidable male cutter (20a) and is arranged at the inlet side of said resin reservoir (18). The plunger (20) is installed in such a manner that when it is in the descended position, said male cutter (20a) contacts with the fixed metal mold (1) to cut off communication between said resin reservoir (18) and said cavity, and when the plunger is advanced forward by the pressure of a resin being injected, a ring-shaped gate is formed around the male cutter (20a) so that the cutter piston (32) and said male cutter (20a) are in contact with each other and the metal mold is in a tightly sealed state.

F I G . 1

## BACKGROUND OF THE INVENTION

### FIELD OF THE INVENTION

The present invention relates to an improved metal mold for molding disks on injection molding machines. More particularly, this invention relates to a sprue-less metal mold which is free from sprue residues at the molding of disks.

### Description of the Prior Art

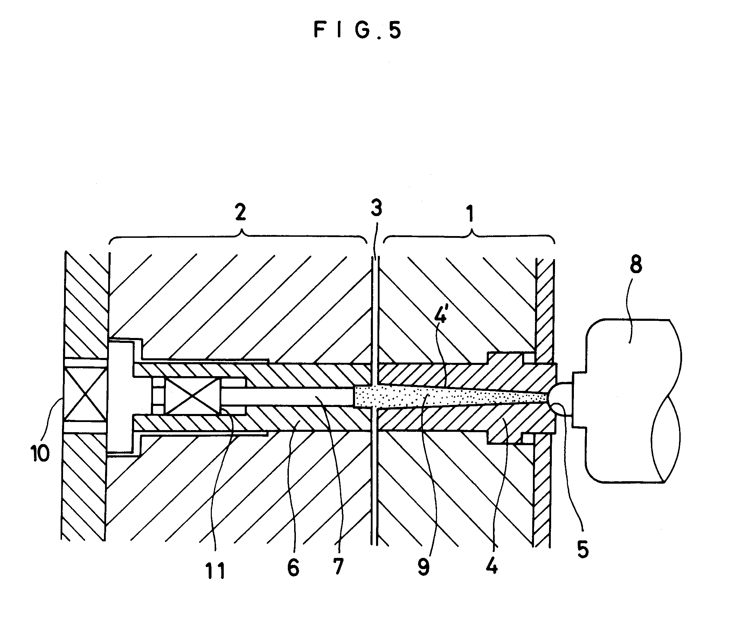

Metal molds for molding disks on injection molding machines known heretofore include those described in, for example, JP-A-54-156,062 (the term "JP-A-" referred to herein signifies "unexamined published Japanese patent application"). In Fig. 5 is schematically shown one of such molds. The mold comprises, by making reference to Fig. 5, a metal mold composed of a fixed mold 1 and a movable mold 2, having incorporated therebetween a cavity 3. In the fixed mold 1, a sprue bush 4 is provided to establish a sprue (gate). The side of the sprue bush 4 facing the movable mold makes a part of the wall which defines the cavity 3, and the side opposite thereto is a spherical concave portion 5 which touches the nozzle.

The movable mold 2 comprises a punch 6 and a center pusher pin 7 in the center thereof. The side of the punch 6 facing the fixed mold constitutes a part of the wall which defines the cavity 3. The fixed mold also comprises a cylinder 10 for driving the punch and a cylinder 11 for the center pusher pin.

The process for injection molding disks comprises:
injecting a molten resin into the cavity 3 defined by the tightly sealed molds 1, 2 from a nozzle 8 through the sprue bush 4; advancing the punch 6 toward the molding upon completion of the injection to thereby punch out a portion from the molded product; and taking out the mold by reversely advancing the punch and releasing the mold. In such a process, a sprue residue (referred to simply hereinafter as "residue") 9 formed inside the sprue 4' confined by the sprue bush 4 is locked together with the punched out fragment at the front end of the punch 6, and is released altogether. The residue 9 and the like are discharged from the front end of the punch by operating the pusher pin 7. In a molding process using such a conventional injection molding machine, the use of the sprue 4' was requisite, and this made it inevitable to have the residue 9 remaining in the sprue.

In a conventional injection molding machine, the residue 9 remains in the sprue 4' each time a product is molded. Thus, the product should be molded with an excess amount of the material, and this leads to an increase of the material cost. With respect to the cycle time of production which is dominated by the temperature of the inlet portion of the sprue 4', the use of a sprue 4' having a relatively large diameter requires a long cooling period and this results in a long cycle time as a whole.

Furthermore, to remove the residue thus formed, it is necessary not only to establish an additional mechanism for its removal, but also to open the metal mold to a length corresponding to that of the sprue. In such a case, the increase in the production cost and the unfavorable effect on the cycle time of production also arise as problems.

The present invention seeks to solve those problems. That is, the present invention provides a metal mold free from sprue residues by particularly devising the structure thereof. Thus, the mold according to the present invention economizes on resin, speeds up the cycle time of production, and is made compact by omitting cylinders for gate cutting and the like.

## SUMMARY OF THE INVENTION

With an aim to accomplish the object set forth above, the present invention provides a metal mold of an injection molding machine which comprises :
a movable metal mold having a cutter piston therein, said cutter piston being installed in such a way that it freely rises and sets with respect to the cavity by a hydraulic means;
a fixed metal mold having provided thereto a resin reservoir between the molding cavity and the inlet of the molten resin, said resin reservoir communicating said cavity and said inlet;
a heating means surrounding said resin reservoir; and
a plunger having a freely slidable male cutter provided therewith, said plunger provided at the inlet side of said resin reservoir;
wherein, said plunger is installed in such a manner that when the plunger is in the descended position, said male cutter contacts with the fixed metal mold to cut off communication between said resin reservoir and said cavity, and when the plunger is advanced forward by the pressure of a resin being injected, a ring-shaped gate is formed around the male cutter, so that the cutter piston and said male cutter is in contact with each other during the metal mold is in a tightly sealed state.

Another embodiment according to the present invention provides a metal mold as described hereinbefore, characterized by that said plunger having provided a male cutter therewith further comprises a plunger portion having holes along the longitudinal direction thereof, a conical male cutter, and a neck portion incorporated between them.

The present invention provides functional effects as follows.

The metal mold is closed tightly at first. At this stage, the cutter piston and the male cutter provided inside the plunger are in contact with each other at the facing planes, and the hydraulic circuit is connected to the drain. By bringing the nozzle chip of the injection molding machine into contact with the inlet of the fixed metal mold and thereafter injecting the molten resin into the resin reservoir, a part of a resin having charged beforehand in the resin reservoir passes through the gate having provided thereto by pressing the plunger forward, and said part of the resin is finally charged in the cavity. Upon solidification or cooling of the resin, the solenoid of the hydraulic circuit is excited to move the cutter piston to the male cutter side; the gate is thus cut, and the mold is opened thereafter to release the molded product. Since the resin reservoir is overheated during the whole process, no solidification of the resin occurs nor residue forms.

By thus avoiding formation of the residue, it is possible to economize on the material and to shorten the cycle time by several seconds, since there is no need to wait the resin to cool and since the distance between the molds at the releasing of the product can be minimized.

BRIEF DESCRIPTION OF THE DRAWINGS

Fig. 1 is the cross sectional view along the longitudinal direction of the main portion of a metal mold according to the present invention at its open state;
Fig. 2 is the cross sectional view along the longitudinal direction of the metal mold as in Fig. 1, at its closed state;
Fig. 3 is the cross sectional view along the longitudinal direction of the metal mold as in Fig. 1, indicating a state of injecting a molten resin;
Fig. 4 is the cross sectional view along the longitudinal direction of the metal mold as in Fig. 1, indicating a state of cutting the gate after injecting the resin melt; and
Fig. 5 is the cross sectional view along the longitudinal direction of the main portion of a conventional metal mold for molding disks.

DESCRIPTION OF THE PREFERRED EMBODIMENT

The present invention is explained in further detail below referring to some examples below, but it should be understood that the present invention is not to be construed as being limited thereto.

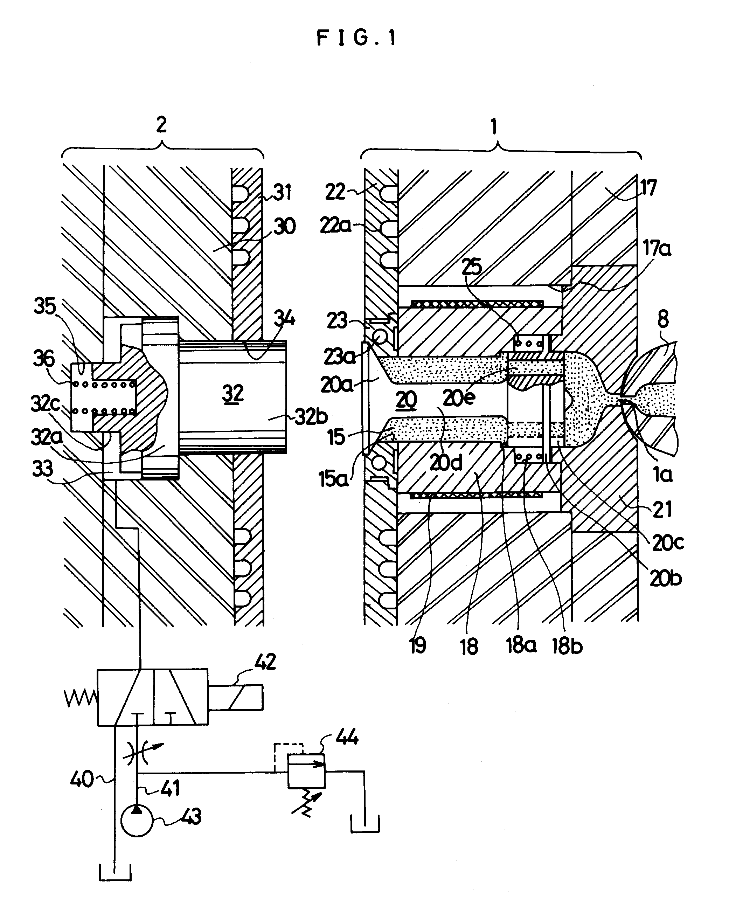

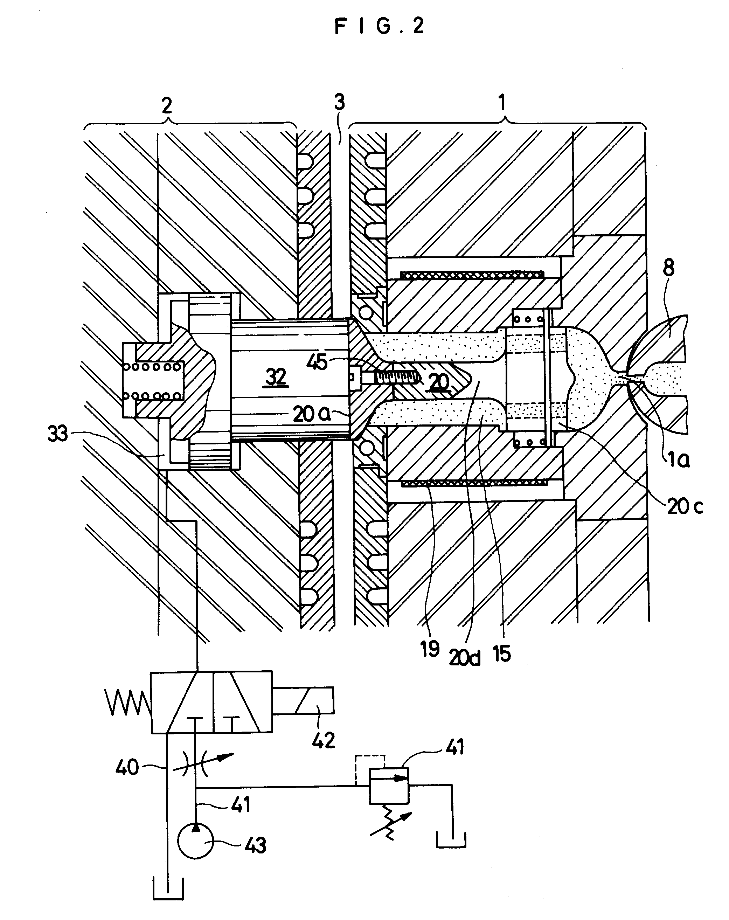

An embodiment according to the present invention is explained below referring to Figs. 1 and 2.

In Fig. 1 is shown the cross sectional view along the longitudinal direction of the main portion of a metal mold according to the present invention, with its fixed mold 1 and movable mold 2 being separated from each other. Fig. 2 is the cross sectional view along the longitudinal direction of the metal mold as in Fig. 1, at a closed state. A cavity 3 is provided at the facing plane between the fixed mold 1 and the movable mold 2.

The fixed mold 1 is described in further detail below.

The fixed mold comprises essentially the main frame 17 of the fixed mold, a resin reservoir member 18, a circular heater 19, a plunger 20 equipped with a male cutter, and a inlet member 21.

The main frame 17 of the fixed mold comprises an intermediate plate and a platen, and has installed on the side (front side) facing the movable mold 2, a fixed end plate 22 having a concave portion which constitutes a part of the cavity 3. Also a communicating hole 17a which penetrates from the front portion to the rear portion is provided.

The cylindrical resin reservoir member 18 is positioned inside the communicating hole 17a of the main frame 17 of the fixed mold, and defines a resin reservoir 15 together with the inlet member 21 and the female cutter 23. The opening of the resin reservoir 15 is provided at the front thereof, and the rear portion is communicated to the inlet 1a of the inlet member 21.

The circular heater 19 is installed around the outer periphery of the resin reservoir member 18. This heater heats the resin reservoir member to a proper temperature on applying an electric current thereto using a control means and a lead wire, though both are not shown in the Figure.

The plunger 20 comprises a plunger portion 20c composed of a conical male cutter 20a and a flange 20b, and a neck portion 20d having a smaller diameter which integrates the front end portion 20a and the flange 20b. The conical male cutter 20a of the plunger 20 is provided at a size sufficiently large to block the opening 15a of the resin reservoir 15. The plunger portion 20c is roughly cylindrical, and to it is provided a flow path 20e through which the resin flows along the longitudinal direction. The plunger portion 20c is fitted to a portion 18a having a larger diameter which is provided inside the resin reservoir 15, and is allowed to slide freely therein. The flange 20b is provided inside a portion 18b having a diameter still larger than that of the portion 18a, and is forced backward with a spring 25. Referring to Fig. 2, the male cutter 20a is provided as a separate body from the plunger portion 20c, but is fastened by a bolt 45 with the plunger portion 20c to make an integrated body. A volume corresponding to the amount of resin injected at a single shot is provided inside the resin reservoir 15,

which is defined by the front plane of the plunger portion 20c, the back plane of the male cutter 20a, and the side wall of the neck portion 20d having a smaller diameter. In the case the male cutter 20a is produced as a monolithic body together with the plunger portion 20c, the plunger portion 20c is formed in such a way that it may have the same diameter as the inner diameter of the resin reservoir 15, and to it may be established a flange 20b so that it may function as a spring shoe.

In the stage shown in Figs. 1 and 2, the male cutter 20a of the plunger 20 is brought into contact with the female cutter 23 by applying thereto pressure with a spring. In the Figure, 22a and 23a are each cooling paths for the gate provided in the fixed end plate 22 and female cutter 23, respectively.

The movable mold 2 is explained in detail below.

The movable mold 2 comprises a mold main frame 30 comprising an intermediate plate and a platen, a movable end plate 31 which defines the cavity 3 between the facing plane of the fixed mold 1, and a cutter piston 32.

The cutter piston 32 includes a portion 32a having a larger diameter which is located inside the hydraulic chamber 33 provided in the mold main frame 30, while the portion 32b having a smaller diameter is fitted to the hole 34 which penetrates through the hydraulic chamber 33 to the movable end plate 31, so that the protruded plane of the cutter piston 32 may face the front end of the male cutter 20a.

The protruded portion 32c having a smaller diameter provided on the front plane of the portion 32a having a larger diameter is allowed to slide freely and is fitted with a concave portion provided on the front surface of the hydraulic chamber 33. Further, a spring 36 is inserted between the portion 32c having a smaller diameter and the concave portion 35 so that it may continuously pressurize the cutter piston 32 forward.

A hydraulic circuit is connected to the hydraulic chamber 33. This hydraulic circuit is well known in the art, which comprises a drain circuit 40 and a pressurizing circuit 41 connected to a hydraulic pump. The circuits 40 and 41 above are selectively switched on and off by exciting the solenoid 42, while the pressure is appropriately controlled with a relief valve 44.

The function of the embodiment is explained below.

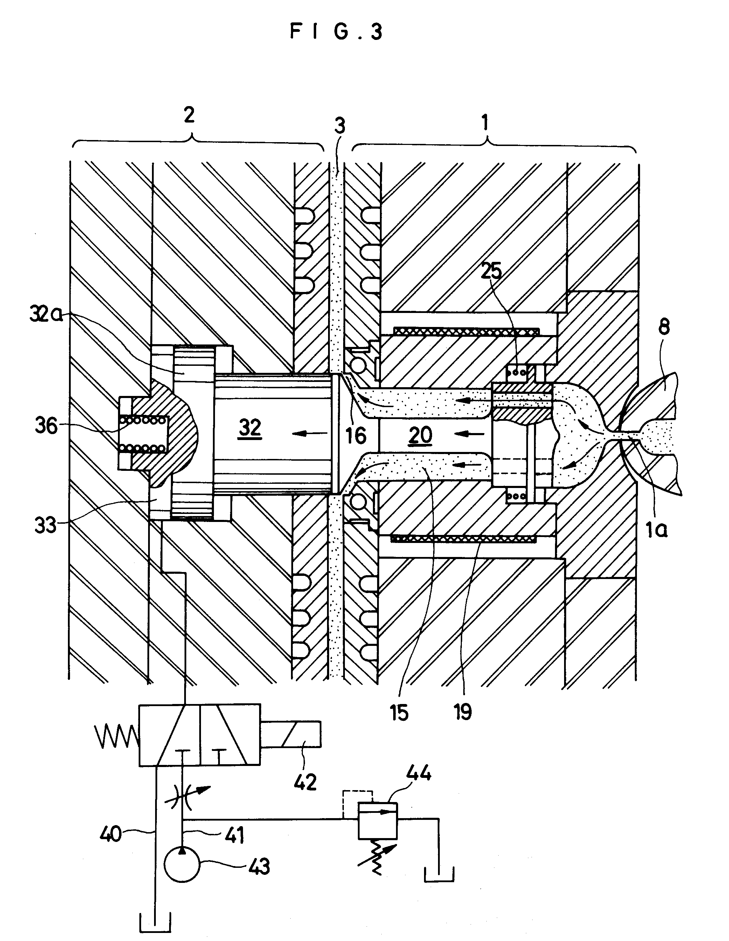

When the mold is tightly closed as shown in Fig. 2, a predetermined amount of the molten resin corresponding to that of a single shot is injected from the nozzle chip 8 into the inlet 1a, so that it may be flown around the portion 20d having a smaller diameter via the inlet 1a and through the flow path 20e. The molten resin newly supplied in this way applies pressure to the male cutter 20a of the plunger 20, via the molten resin having charged previously inside the resin reservoir, so that the plunger 20 may be advanced forward against the springs 25 and 36, as shown in Fig. 3. This accompanies the forward advancement of the cutter piston 32. At this stage the hydraulic circuit is switched to the drain circuit.

The molten resin inside the resin reservoir 15 is pushed by the injected molten resin and is charged into the cavity 3 through the circular gate 16 provided between the opening 15a and the male cutter 20a. At this point, the cutter piston 32 is pushed by the plunger 20 to advance forward the hydraulic chamber 33, until the cutter piston, i.e., the portion 32a having a larger diameter thereof, is brought into contact with the front end of the hydraulic chamber 33. Since the molten resin inside the resin reservoir 15 is constantly heated with a heater 19, no solidification nor cooling occurs, and hence there is no formation of the sprue.

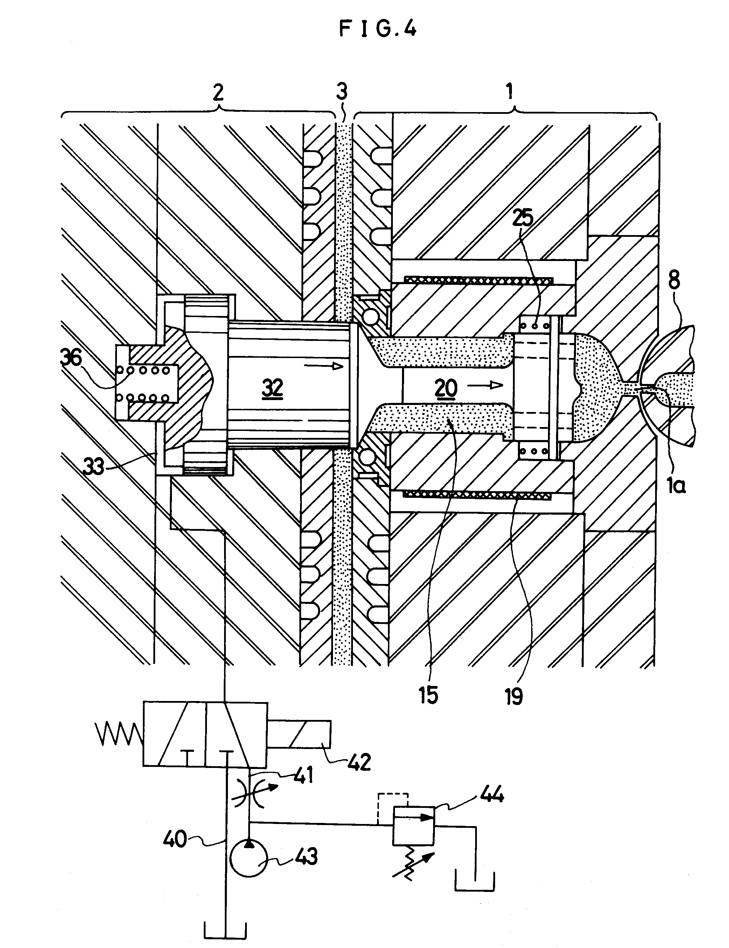

The solenoid 42 is excited simultaneously with or immediately after the completion of the injection to switch the valve for cutting the gate as is shown in Fig. 4. Thus the pressurizing circuit 41 is connected to the hydraulic pump 43 to thereby move the cutter piston 32 to the plunger side by applying a pressure to the hydraulic chamber 33. In this manner the gate is cut by the male cutter 20a and the female cutter 23. The molded product is taken out from the mold thereafter by releasing the mold.

Generally, in the gate cutting step, the solenoid 42 is excited simultaneously with or immediately after the completion of the injection as mentioned hereinbefore. However, the solenoid 42 may be excited at the initiation of the injection.

In such a case, the male cutter 32 is pressed back by the hydraulic pressure. Thus, when the plunger 20 is advanced forward by the pressure of the injection flow, the relief valve 44 should be controlled properly that the flow pressure may overcome the pressure applied by the spring to thereby open the gate, and then, that the gate may be cut upon reducing the flow pressure to give way to the hydraulic pressure.

With respect to the molding process of compact disks (CD's), a conventional cooling step took at least 3 seconds. However, the present invention sufficiently cools the CD in a mere 1 to 2 seconds since the step requires only the cooling of the 1.2 mm thick CD.

As described in detail in the foregoing, the present invention enables injection molding of disks free from sprue residues. Accordingly, the molded products can economize on the material and hence can be produced at reduced cost. Also, the cooling time can be determined without taking the cooling of the residue into account that, the process cycle time is shortened and further lower the production cost. Furthermore, since the molding process requires no opening of the mold to release the molded product, the mold closing and opening operation time is minimized; it further contributes to the speeding up of the production cycle.

While the invention has been described in detail and with reference to specific embodiments thereof, it will be apparent to one skilled in the art that various changes and modifications can be made therein without departing from the spirit and scope thereof.

## Claims

1. A metal mold of an injection molding machine for producing disks, comprising a movable metal mold and a fixed metal mold which, upon bringing it into contact, defines a cavity therebetween, said metal mold comprising:

   a cutter piston provided inside the movable mold, which is installed in such a way that it freely rises and sets with respect to the cavity and that an elastic force is exerted thereto along the longitudinal direction;

   a resin reservoir provided inside the fixed mold, which is established along the longitudinal direction and has an inlet facing the side opposite to the side facing the cavity;

   a heater for heating said resin reservoir from the outside, provided along the periphery thereof; and

   a male cutter provided inside the resin reservoir slidably between the cavity and the inlet, which is forced resiliently to the inlet at the time of non-injection to seal the opening of the resin reservoir to the cavity by contacting with the female cutter provided on said opening, whereby, upon bringing the movable metal mold and the fixed metal mold into contact, said cutter piston and said male cutter being in contact with each other, at the time of injecting the molten resin into the cavity the male cutter being pushed out together with the cutter piston under the pressure of the molten resin poured into the reservoir from the inlet to form a gap between the male cutter and the female cutter against the resiliently biasing force and inject the molten resin into the cavity.

2. A metal mold according to Claim 1, wherein the means for biasing said cutter piston resiliently is a hydraulic device.

3. A metal mold according to Claim 1, wherein the volume of the resin reservoir corresponds approximately to the volume of the cavity.

EP 0 467 393 A2

# F I G . 1

6

# F I G . 2

F I G . 3

# F I G.4

F I G . 5